# EUROPÄISCHE PATENTSCHRIFT

(11) **EP 0 906 205 B1**
(45) Veröffentlichungstag und Bekanntmachung des Hinweises auf die Patenterteilung: **08.03.2000**
(21) Anmeldenummer: 97931623.9
(22) Anmeldetag: 16.06.1997
(51) Int. Cl.: B60R 21/26

(54) **Verfahren und Vorrichtung zur Beeinflussung des Einströmens des Gases in einen Gassack eines Airbagmoduls**
Device for influencing the inflow of gas into the gas bag of an air bag module
Procédé et dispositif permettant d'influer sur l'afflux de gaz dans le sac à gaz d'un module airbag

(30) Priorität: 21.06.1996 DE 19626463
(43) Veröffentlichungstag der Anmeldung: 07.04.1999
(73) Patentinhaber: Petri AG, 63743 Aschaffenburg (DE)
(72) Erfinder: SCHNÖWITZ, Jörn, D-63739 Aschaffenburg (DE); KAMM, Martin, D-13469 Berlin (DE); ECKERT, Nick, D-12587 Berlin (DE); ORTMANN, Sven, D-15370 Fredersdorf (DE); MARKFORT, Dieter, D-10587 Berlin (DE)
(74) Vertreter: Bärmann, Klaus, Dipl.-Ing.
(86) Internationale Anmeldenummer: DE9701252
(87) Internationale Veröffentlichungsnummer: WO9749581

(56) Entgegenhaltungen:
- DE-A- 4 433 014
- DE-A- 19 602 471
- DE-U- 29 612 777
- US-A- 4 178 017
- US-A- 5 149 130
- US-A- 5 524 925
- PATENT ABSTRACTS OF JAPAN vol. 097, no. 007, 31.Juli 1997 & JP 09 086333 A (TOYO TIRE &RUBBER CO LTD), 31.März 1997,

## Beschreibung

Die Erfindung betrifft eine Vorrichtung zur Beeinflussung des Einströmens des Gases in einen Gassack eines Airbagmoduls nach dem Oberbegriff der Ansprüche 1 und 9.

Vorrichtungen zur Beeinflussung der Abströmrichtung der aus einem Gasgenerator eines Airbagmoduls austretenden Gases sind bekannt. Damit soll erreicht werden, daß der Gassack vornehmlich in eine für den Schutz des Fahrzeuginsassen vorteilhafte Richtung aufgeblasen wird.

Aus der gattungsbildenden US-A-5 149 130 ist ein Airbagmodul bekannt, bei dem sich um den Gasgenerator herum ein Wärmeschutz erstreckt. Dieser Wärmeschutz weist Klappen auf, die nach Zündung des Gasgenerators aufklappen und einen ungehinderten Fluß des Gases in den Airbag ermöglichen. Die Klappen sind nur an einer Seite mit dem Wärmeschutz verbunden.

Weiterhin sind aus der US-A-4 178 017 Führungsplatten bekannt, die vor den Ausströmöffnungen des Gasgenerators angeordnet sind. Die Führungsplatten werden durch die aus dem Gasgenerator austretenden Gase so verformt, daß sie die Ausströmöffnungen ganz oder teilweise freigeben.

Eine reproduzierbare Beeinflussung der Abströmrichtung der aus dem Gasgenerator austretenden Gase ist mit diesen Anordnungen nur schwer möglich.

Aus der US-PS 5,306,042 ist eine Vorrichtung zur Steuerung der Entfaltung eines Beifahrer-Airbags bekannt. Bei diesem ist eine Abdeckkappe über dem gefalteten Gassack vorgesehen, die nach der Zündung des Gasgenerators durch den sich aufblasenden Gassack von der Armaturentafel abgehoben und um einen vorgegebenen Winkel geschwenkt wird. Die Abdeckkappe befindet sich auch nach dem Abheben zwischen dem Gassack und der Windschutzscheibe. Dadurch ist eine Ausbreitung des Gassacks in Richtung der Windschutzscheibe unterbunden und der Gassack breitet sich vornehmlich in Richtung des Fahrzeuginsassen aus.

Der Nachteil dieser Vorrichtung besteht darin, daß die Abdeckkappe seitliche Führungen aufweisen muß, um das Abheben und das Schwenken um einen gewünschten Betrag zu ermöglichen. Die Abdeckkappe wird dadurch gegenüber üblichen Abdeckkappen wesentlich komplizierter und aufwendiger.

Zur Beeinflussung der Strömung des aus dem Gasgenerator austretenden Gases zum Gassack sind weiterhin Diffusoren bekannt. Diese sind zwischen dem Gasgenerator und dem Gassack angeordnet. So ist aus der EP-A 0 677 433 A1 ein Diffusor bekannt, der Abströmöffnungen aufweist, die durch schräge Leitbleche begrenzt sind. Auf diese Weise wird das nach oben aus dem Gasgenerator austretende Gas umgelenkt und trifft zunächst auf die Seitenabschnitte des Gassackes, so daß diese bevorzugt aufgeblasen werden und der Gassack in der Mitte verzögert aufgeblasen wird.

Der Nachteil eines solchen Diffusors besteht darin, daß die Herstellungskosten durch die Leiteinrichtungen erhöht werden und daß durch die hervorstehenden Leiteinrichtungen die Bauhöhe des Airbagmoduls vergrößert wird. Das ist jedoch nachteilig, da sowohl im Lenkrad als auch in den übrigen Baugruppen, in denen Airbagmodule mit dem gefalteten Gassack zu verstauen sind, wenig Platz zur Verfügung steht.

Der Erfindung liegt die Aufgabe zugrunde, die Beeinflussung der Abströmrichtung des aus einer Aufblasvorrichtung austretenden Gases und damit des Einströmens des Gases in den Gassack mit geringerem Aufwand und ohne zusätzlichen Platzbedarf im Bereich des gefalteten Gassackes zu erzielen.

Erfindungsgemäß wird das gemäß den Merkmalen der Ansprüche 1 und 9 erreicht.

Bei einer Vorrichtung zur Beeinflussung der Einströmung des Gases in einen Gassack eines Airbagmoduls mit Aufblasvorrichtung und Gassack, wobei zwischen der Aufblasvorrichtung und dem Gassack mindestens ein Bauteil vorgesehen ist, das unter dem Druck des aus der Aufblasvorrichtung austretenden Gases verformbar ist und in vorbestimmter Richtung mindestens eine Öffnung formt oder freigibt, weist erfindungsgemäß das Bauteil einen klappenartigen Abschnitt auf, der zumindest teilweise durch umgebende Perforationen im Bauteil begrenzt ist, und zwischen dem Bauteil und dem klappenartigen Abschnitt sind sich überlappende Schlitze vorgesehen, zwischen denen mindestens eine Haltelasche verläuft, die das Bauteil mit dem klappenartigen Abschnitt verbindet.

Die Haltelasche ist gegenüber der scharnierartigen Verbindung zwischen dem Bauteil und dem klappenartigen Abschnitt vorgesehen und wird unter der Wirkung des Gasdruckes aufgebogen. Der Schwenkbereich des klappenartigen Abschnitts wird durch die Haltelasche begrenzt. Der Schwenkbereich kann insbesondere durch die Wahl der Länge und Form der Haltelasche in seiner Größe vorbestimmt werden.

Es können Diffusoren verwendet werden, bei denen im Herstellungsprozeß keine zusätzlichen Verformungen für die Erzeugung von Leiteinrichtungen erforderlich sind. Die Leiteinrichtungen werden unter Ausnutzung des durch die Gase ausgeübten Druckes erst unmittelbar nach der Aktivierung der Aufblasvorrichtung erzeugt. Bei der Herstellung der Diffusoren sind lediglich Ausstanzungen vorzusehen, um die Verformung eines entsprechenden Bauteils zu ermöglichen.

Ein wesentlicher Vorteil besteht auch darin, daß wegen der Erzeugung der Leiteinrichtung erst nach der Aktivierung der Aufblasvorrichtung, kein zusätzlicher Stauraum für den Airbagmodul erforderlich ist.

Durch die Ausdehnung, Form und Lage der Perforationen ist die Größe und Form des klappenartigen Abschnitts bestimmt. Es ist zweckmäßig, daß die Perforationen schlitzartig ausgeführt sind.

In Abhängigkeit von der gewünschten Abströmrichtung des Gases kann der klappenartige Abschnitt einseitig oder zweiseitig schwenkbar sein.

Eine zweckmäßige Ausführungsform sieht vor, daß der klappenartige Abschnitt an zwei gegenüberliegenden Seiten eine durchgehende als Scharnier wirkende Verbindung mit dem Bauteil aufweist und daß parallel zu diesen Seiten mindestens ein Schlitz und Haltelaschen im klappenartigen Abschnitt verlaufen. Bei dieser Ausführungsform wird unter dem Einfluß des Druckgases der mittlere Bereich des klappenartigen Abschnitts aufgewölbt. Die Haltelasche kann zweckmäßig eine L-, Z-, U- oder T-Form aufweisen.

Zur Beeinflussung des Schwenkbereiches des klappenartigen Abschnitts sind in einer Ausführungsform in diesem Druckausgleichsöffnungen vorgesehen. Durch die Wahl der Größe dieser Öffnungen kann die Flächenbelastung des klappbaren Abschnitts durch das Druckgas und damit dessen Schwenkbereich beeinflußt werden.

Das Bauteil mit dem klappbaren Abschnitt ist zweckmäßig Bestandteil eines Gassammelrohres, das die Aufblasvorrichtung umgibt. Gegenüber einem herkömmlichen Gassammelrohr ist es lediglich erforderlich, den klappenartigen Abschnitt durch Perforierungen bzw. schlitzartige Ausstanzungen im Gassammelrohr zu definieren. Gegenüber einem bekannten Gassammelrohr ist kein zusätzlicher Platzbedarf erforderlich.

Das Bauteil mit dem klappbaren Abschnitt kann aber auch eine beliebige andere Baugruppe zwischen der Aufblasvorrichtung und dem Gassack sein.

Der klappenartige Abschnitt kann unterschiedliche Querschnittsformen aufweisen, z.B. eine flache, gewölbte oder winkelförmige Querschnittsform.

Eine Vorrichtung zur Beeinflussung der Einströmung des Gases in einen Gassack eines Airbagmoduls mit Aufblasvorrichtung und Gassack, wobei zwischen der Aufblasvorrichtung und dem Gassack mindestens ein Bauteil vorgesehen ist, das unter dem Druck des aus der Aufblasvorrichtung austretenden Gases verformbar ist und in vorbestimmter Richtung mindestens eine Öffnung formt oder freigibt, kann erfindungsgemäß aber auch so aufgebaut sein, daß das Bauteil gegenüberliegende sich überlappende Abschnitte aufweist, und daß mindestens ein Abschnitt unter dem Druck des Gases vom anderen Abschnitt wegbewegbar ist.

In einer weiteren Ausgestaltung ist vorgesehen, daß mindestens ein Teil des verformbaren Bauteils eine andere Steifigkeit als die anderen Teile des Bauteils aufweist. Wenn beide Teile die gleiche Steifigkeit aufweisen, werden beide Teile gleichermaßen verformt und voneinander weggedrückt. Weist dagegen ein Teil eine größere Steifigkeit als das andere Teil auf, wird ein Teil nicht oder wesentlich weniger verformt als das andere Teil. Das kann z.B. durch das Vorsehen von Sicken erreicht werden. Das Teil mit der größeren Steifigkeit, das sich nicht oder wenig verformt, dient als Leiteinrichtung für das Gas, während durch die Steifigkeit des zweiten Teiles die Größe der Abströmöffnung für das Gas bestimmt wird. Die Anordnung mindestens einer Sicke in mindestens einem der Teile ist auch deshalb zweckmäßig, weil hierdurch ein Raum zwischen den Teilen geschaffen wird, in den das Gas eintreten kann. Dadurch wird der Vorgang des Trennens der Teile und damit der Freigabe der Abströmöffnung unterstützt.

Unterschiedliche Steifigkeiten können auch durch Materialwahl und/oder durch unterschiedliche Materialstärken erreicht werden.

Das verformbare Bauteil besteht zweckmäßig aus Metall. Das Bauteil kann unter dem Druck des aus der Aufblasvorrichtung strömenden Gases sowohl plastisch als auch elastich verformbar sein.

Die Erfindung soll in Ausführungsbeispielen anhand von Zeichnungen erläutert werden. Es zeigen:
- Fig. 1: ein Gassammelrohr mit einseitig öffnender Abströmklappe;
- Fig. 2: einen Querschnitt durch das Gassammelrohr nach Fig. 1;
- Fig. 3: eine einseitig öffnende Abströmklappe mit Druckausgleichsöffnungen;
- Fig. 4: eine quer zur Längsachse eines Rohrgasgenerators liegende Abströmklappe;
- Fig. 5 u. 6: Varianten einer einseitig öffnenden Abströmklappe;
- Fig. 7: eine Ausführung mit zweiseitig öffnender Abströmklappe;
- Fig. 8: eine Seitenansicht eines klappbaren Diffusors;
- Fig. 9: eine Frontansicht des Diffusors nach Fig. 8;
- Fig. 10: einen Querschnitt des Diffusors nach Fig. 8;
- Fig. 11: einen Querschnitt des Diffusors nach Fig. 8 in geöffneter Stellung;
- Fig. 12: einen Diffusor nach Fig. 10 mit gefaltetem Gassack;
- Fig. 13: einen Diffusor nach Fig. 11 mit einem sich öffnenden Gassack;
- Fig. 14: einen gekrümmten Diffusor in Ruhestellung;
- Fig. 15: den Diffusor nach Fig. 14 nach Einwirkung des Druckgases;

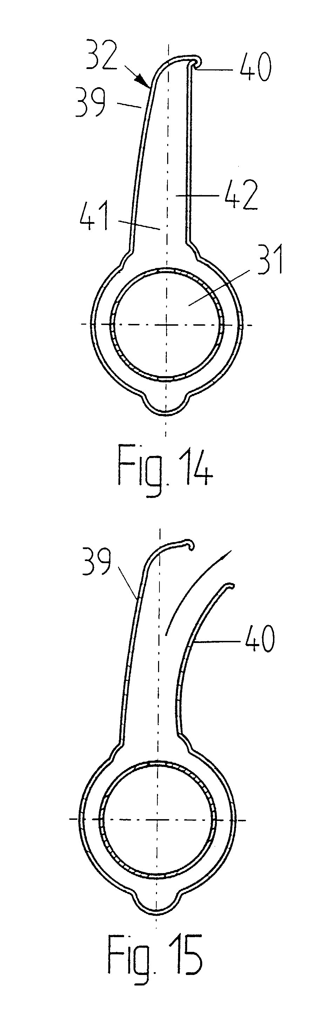

- Fig. 15: einen Querschnitt durch eine weitere Ausführungsform eines klappbaren Diffusors;

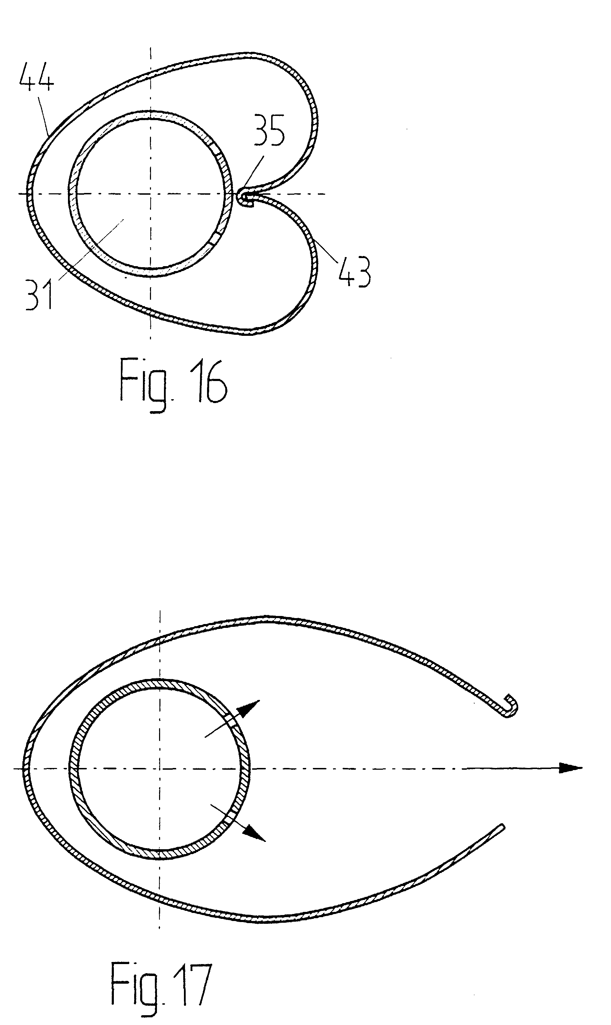

- Fig. 17: den Diffusor nach Fig. 16 nach Einwirkung des Druckgases;

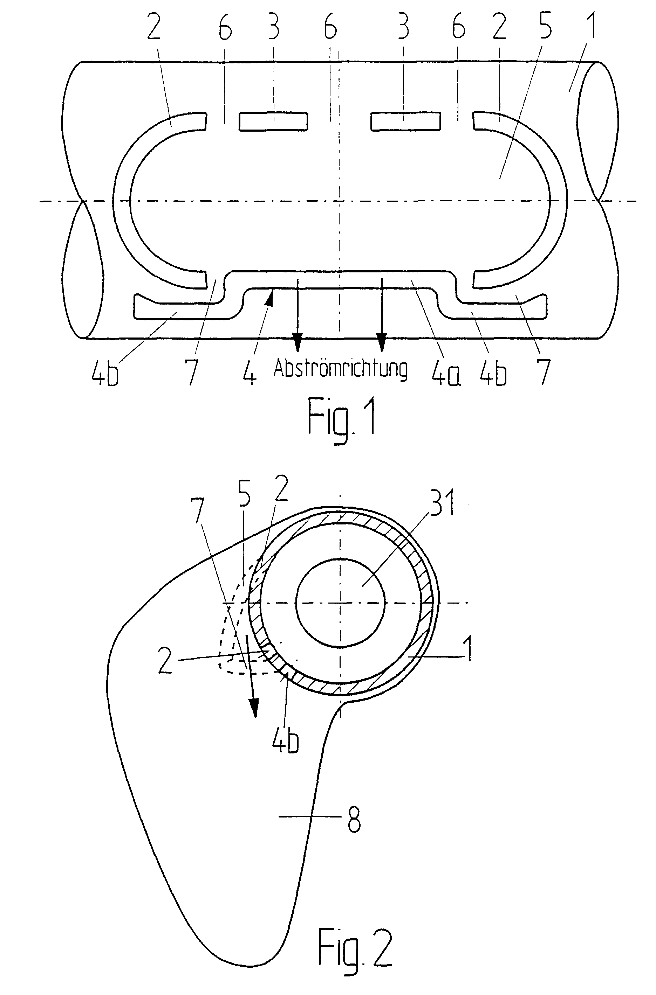

In der Fig. 1 ist ein Gassammelrohr 1 dargestellt, in dem ein Gasgenerator 31 (Fig. 2) angeordnet ist. Das Gassammelrohr 1 ist in dieser Ausführungsform ein Hohlzylinder mit kreisförmigem Querschnitt, wie es aus Fig. 2 erkennbar ist. In Fig. 2 ist das Gassammelrohr gegenüber der Fig. 1 in verkleinertem Maßstab dargestellt, wobei die Wandstärke übertrieben dick dargestellt ist. Das Gassammelrohr ist mit Ausstanzungen 2, 3 und 4 versehen, wodurch ein klappenartiger Abschnitt 5 ausgebildet ist. Die Ausstanzungen sind in einem Bereich des Gassammelrohres vorgesehen, in dem der gefaltete Gassack an diesem anliegt. Der klappenartige Abschnitt ist durch die Ausstanzungen 2 seitlich vom Gassammelrohr getrennt. Die Ausstanzungen 3 unterbrechen die Verbindung des klappenartigen Abschnittes mit dem Gassammelrohr teilweise, wobei weiterhin eine Verbindung über Stege 6 besteht. Die Ausstanzungen 2 und die Stege 6 ermöglichen ein Aufklappen des klappenartigen Abschnitts 5 um die Stege 6, die als Scharnier wirken.

Die Ausstanzung 4 weist einen mittleren Abschnitt 4a auf, der sich zwischen den beiden Ausstanzungen 2 erstreckt, und den Ausstanzungen 3 gegenüberliegt. Die Ausstanzung 4 weist weiterhin seitliche Abschnitte 4b auf, die die Ausstanzungen 2 teilweise überlappen, so daß zwischen beiden L-förmige Haltelaschen 7 ausgebildet sind. Diese Haltelaschen bewirken eine Begrenzung des Aufklappens des klappenartigen Abschnitts 5 unter Einwirkung des Druckgases.

Im Ruhezustand entspricht das Gassammelrohr bis auf die Ausstanzungen einem bekannten Gassammelrohr. Es ist kein zusätzlicher Platzbedarf und Aufwand für einen gesonderten Diffusor erforderlich. Nach Zündung des Gasgenerators wird bei der erfindungsgemäßen Vorrichtung unter der Einwirkung des Druckgases der klappenartige Abschnitt aufgebogen und gibt eine oder mehrere Abströmöffnungen in den Gassack frei. Erfindungsgemäß wird also ein Diffusor erst in dem Moment aufgebaut, in dem er erforderlich ist. Im vorliegenden Ausführungsbeispiel dient der klappenartige Abschnitt 5 dazu, um den Gasstrahl seitlich, quer zur Längsachse des Gassammelrohres 1 aus diesem austreten und in den Gassack 8 eintreten zu lassen.

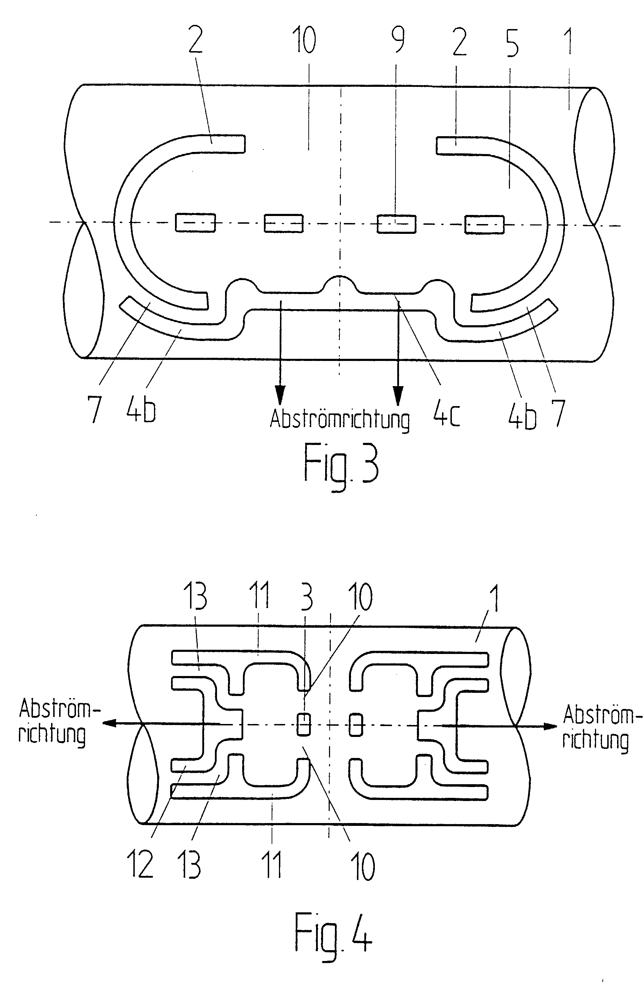

Beim Ausführungsbeispiel der Fig.3 sind Druckausgleichsöffnungen 9 im klappenartigen Abschnitt 5 vorgesehen, die dessen Aufklappgeschwindigkeit etwas verringern. Durch- die Größe dieser Druckausgleichsöffnungen sind also unterschiedliche Aufklappgeschwindigkeiten erzielbar.

Beim Ausführungsbeispiel der Fig. 3 weist die Ausstanzung 4 weiterhin einen mittleren Abschnitt 4c auf, der angrenzend an den klappenartigen Abschnitt einen wellenförmigen Rand aufweist. Demzufolge weist auch der klappenartige Abschnitt 5 in diesem Bereich einen wellenförmigen Rand auf. An diesem reißt die Strömung in Arbeitsstellung des Abschnitts 5 ab, so daß sich anschließend eine turbulente Strömung ausbildet. Wie beim Ausführungsbeispiel der Fig. 1 sind zwischen den Ausstanzungen 2 und 4b L-förmige Haltelaschen 7 vorgesehen.

Im Unterschied zum Ausführungsbeispiel der Fig. 1 sind beim Ausführungsbeispiel der Fig. 3 die Ausstanzungen 2 an der Scharnierseite länger, und es ist ein durchgehender scharnierartig wirkender Abschnitt 10 vorhanden.

Bei den bisherigen Ausführungsbeispielen waren die Ausstanzungen so angeordnet, daß das Gas quer zur Längsachse des Gassammelrohres abströmte. Beim Ausführungsbeispiel der Fig. 4 erfolgt die Abströmung hauptsächlich in Richtung der Längsachse des Gassammelrohres, indem die scharnierartigen Abschnitte 10 quer zu dieser Achse liegen. In diesem Ausführungsbeispiel sind F-förmige Ausstanzungen 11 vorgesehen, denen an der Scharnierseite eine Ausstanzung 3 und an der gegenüberliegenden Seite eine Ausstanzung 12 zugeordnet sind, so daß Z-förmige Haltestege 13 vorhanden sind.

Bei einer spiegelbildlichen Anordnung der Ausstanzungen bezüglich einer Querachse, wie es auf der rechten Seite der Fig. 4 dargestellt ist, wird eine vorzugsweise Abströmung in entgegengesetzter Richtung erzielt.

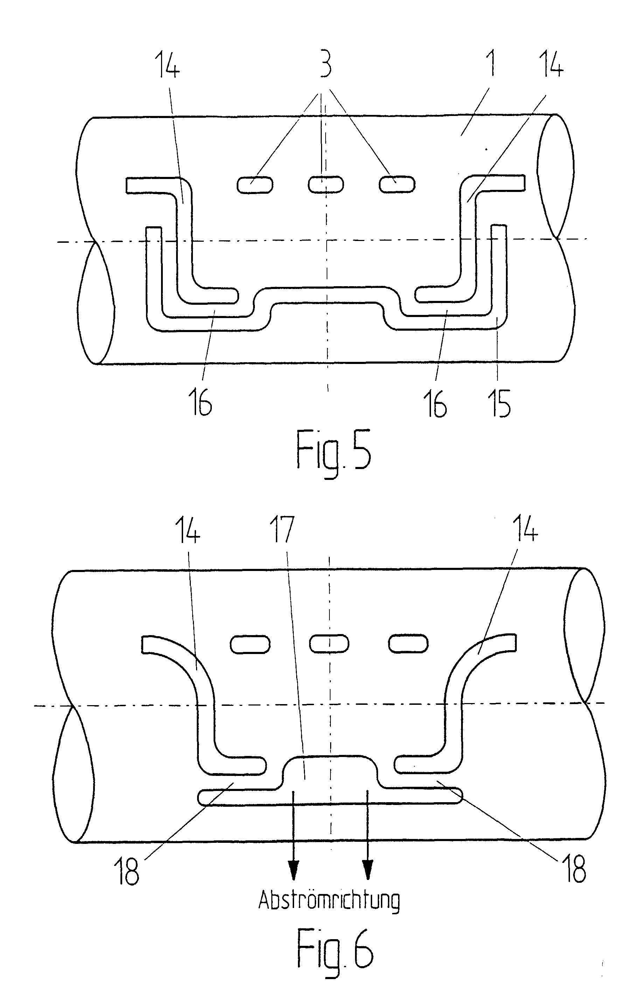

Beim Ausführungsbeispiel der Fig. 5 sind zwei Z-förmige Ausstanzungen 14 vorhanden, zwischen denen auf der Scharnierseite Ausstanzungen 3 liegen und die auf der entgegengesetzten Seite von einer solchen Ausstanzung 15 eingerahmt sind, daß zwischen diesen und den Ausstanzungen 14 U-förmige Haltelaschen 16 vorliegen.

Das Ausführungsbeispiel der Fig 6 ist ähnlich dem der Fig. 5, wobei anstelle der Ausstanzung 15 eine solche Ausstanzung 17 vorgesehen ist, daß zwischen dieser und den Z-förmigen Ausstanzungen 14 L-förmige Haltestege 18 vorhanden sind.

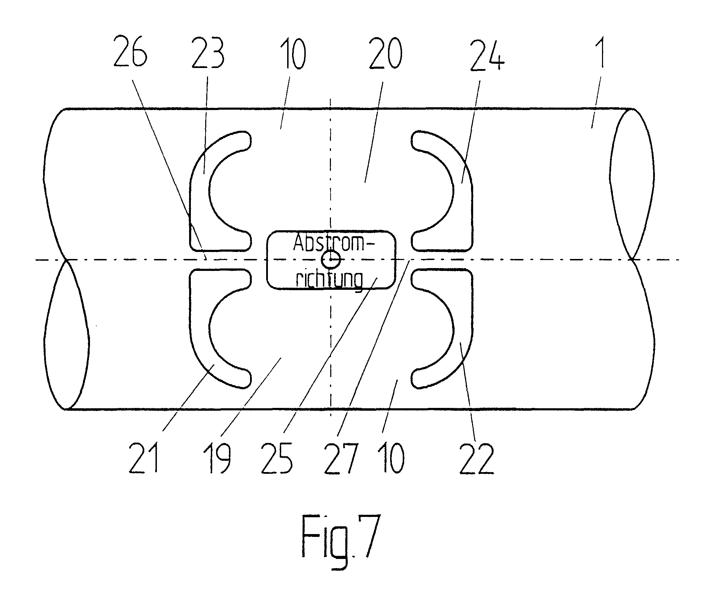

Während bei den bisherigen Ausführungsbeispielen die Ausstanzungen so vorgesehen sind, daß sich die klappenartigen Abschnitte unter Druckeinwirkung einseitig öffnen, ist in der Fig. 7 ein Ausführungsbeispiel dargestellt, bei dem zwei symmetrisch angeordnete klappenartige Abschnitte 19, 20 vorgesehen sind, die sich zwischen Ausstanzungen 21, 22, 23 und 24 erstrecken. Weiterhin ist eine mittlere Ausstanzung 25 vorgesehen, die sich zwischen den klappenartigen Abschnitten 19 und 20 erstreckt. Diese sind untereinander durch T-förmige Haltelaschen 26 und 27 verbunden, die sich zwischen den Ausstanzungen 21, 23 bzw. 22, 24 sowie der mittleren Ausstanzung 25 erstrecken.

Bei diesem Ausführungsbeispiel erfolgt die Abströmung einerseits über die mittlere Ausstanzung 25, d.h. senkrecht zur Zeichnungsebene. Andererseits werden die klappenartigen Abschnitte unter Druckgaseinwirkung in der Mitte angehoben und das Gas strömt dann auch seitlich in Richtung der Längsachse des Gassammelrohres 1 ab.

In den dargestellten Ausführungsbeispielen sind die Ausstanzungen und damit der klappenartige Ausschnitt in einem Gassammelrohr vorgesehen. Das Bauteil, in dem der klappenartige Ausschnitt vorgesehen ist, kann aber auch ein beliebiges anderes Bauteil zwischen der Aufblasvorrichtung und dem Gassack sein.

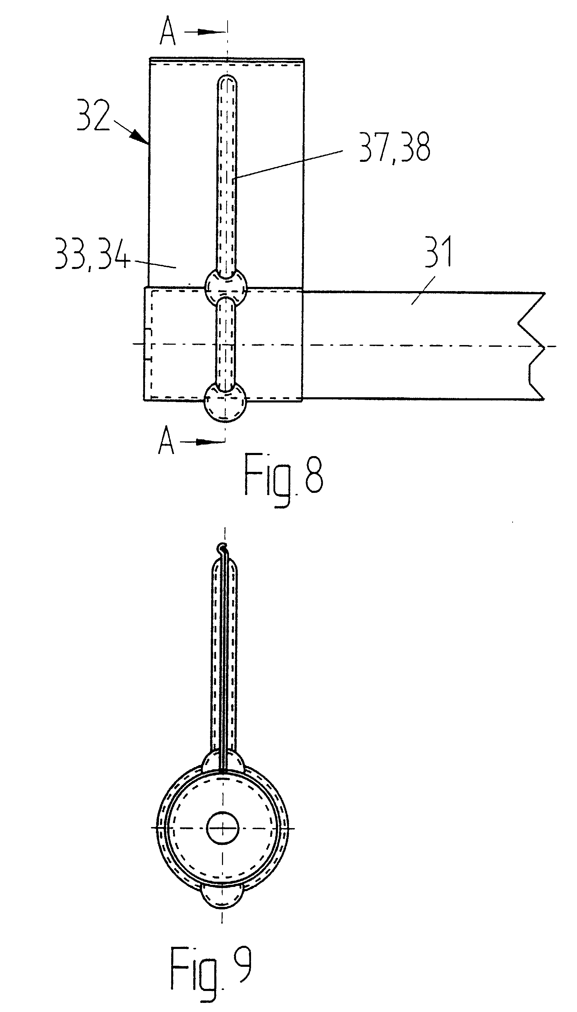

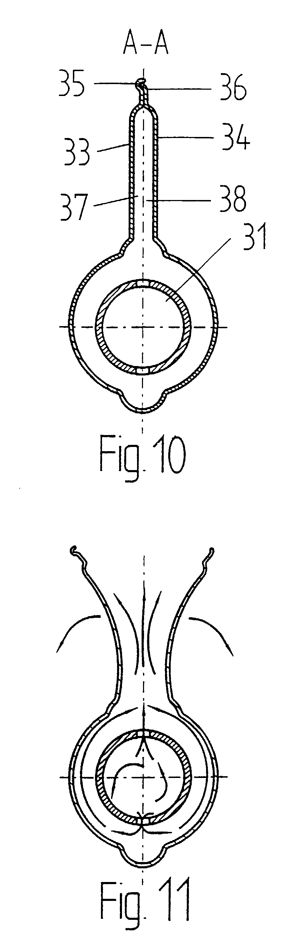

In den Figuren 8 bis 11 ist eine weitere Ausführungsform dargestellt. Bei dieser ist im Bereich eines Gasgenerators 31 ein Diffusor 32 vorgesehen, der den Gasgenerator umgibt und im oberen Bereich gegenüberliegende Seitenteile 33, 34 aufweist, die miteinander verbunden sind. Da die Seitenteile unmittelbar aufeinanderliegen, ist der Platzbedarf sehr gering. Diese Seitenteile weisen an den oberen Verbindungsstellen Lippen 35, 36 auf und weiterhin Sicken 37, 38. Zwischen diesen Sicken ist ein Kanal für das Einströmen des Gases aus dem Gasgenerator vorhanden. Die Figuren 9 und 10 zeigen den Diffusor vor Austritt des Gases aus dem Gasgenerator. Unter der Einwirkung des Druckgases werden die Seitenteile 33, 34 voneinander weggedrückt so daß nach oben eine Öffnung freigegeben wird, wie es in Fig. 11 dargestellt ist. Die Lippen 35, 36 verhindern beim Öffnen der Seitenteile eine Beschädigung des Gassackes.

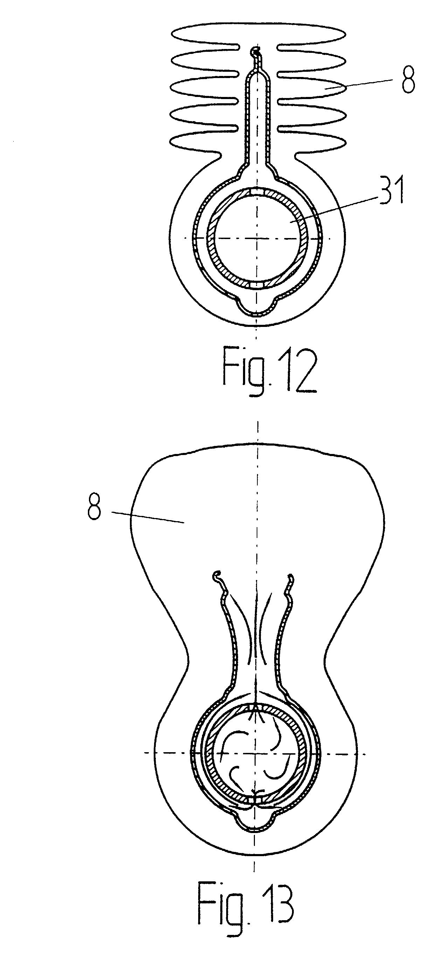

Die Figur 12 zeigt beispielhaft den im Bereich des Diffusors gefalteten Gassack 8 und Figur 13 den sich öffnenden Gassack 8.

In der Fig. 14 ist eine weitere Ausführungsform eines Diffusors dargestellt. Dieser weist zwei Seitenteile 39, 40 auf, die im oberen Bereich gekrümmt sind. Weiterhin weisen die Seitenteile Sicken 41, 42 auf, wobei die Sicke 41 größer ist als die Sicke 42. Dadurch ist die Biegesteifigkeit des Seitenteils 39 größer als die des Seitenteils 40. Wie in Fig. 15 dargestellt ist, wird sich deshalb das Seitenteil 39 und insbesondere auch dessen Krümmung im oberen Bereich unter dem Einfluß des Druckgases kaum verformen, während das Seitenteil 40 verformt wird. Dadurch wird eine schräg nach rechts gerichtete Strömungsrichtung erzielt, wie es in Fig. 15 dargestellt ist.

Bei dem Ausführungsbeispiel der Fig. 16 weist der Diffusor zwei Seitenteile 43, 44 auf, die an ihren Enden in Richtung des Gasgenerators 31 umgebogen sind und mittels der Lippe 35 miteinander verbunden sind, hinter die das Ende des Seitenteils 43 greift. Dieser Diffusor ragt in Ruhestellung nur in geringem Maße in den nicht dargestellten Gassack. Nach Einwirkung des Druckgases werden die Seitenteile 43, 44 in Richtung des Gassackes verformt, wie es in Fig. 17 dargestellt ist, so daß das Druckgas erst in einer gewissen Entfernung vom Gasgenerator 31 in den Gassack strömt.

## Patentansprüche

1. Vorrichtung zur Beeinflussung der Einströmung des Gases in einen Gassack eines Airbagmoduls mit Aufblasvorrichtung und Gassack, wobei zwischen der Aufblasvorrichtung (31) und dem Gassack (8) eines Airbagmoduls mindestens ein Bauteil (1, 32) vorgesehen ist, das unter dem Druck des aus der Aufblasvorrichtung (31) austretenden Gases verformbar ist und in vorbestimmter Richtung mindestens eine Öffnung formt oder freigibt,
**dadurch gekennzeichnet,**
daß das Bauteil (1) einen klappenartigen Abschnitt (5) aufweist, der zumindest teilweise durch umgebende Perforationen (2, 3, 4) im Bauteil (1) begrenzt ist, und daß zwischen dem Bauteil (1) und dem klappenartigen Abschnitt sich überlappende Schlitze (2, 4b) vorgesehen sind, zwischen denen mindestens eine Haltelasche (7) verläuft, die das Bauteil (1) mit dem klappenartigen Abschnitt (5) verbindet.

2. Vorrichtung nach Anspruch 1, **dadurch gekennzeichnet,** daß die Perforationen (2, 3, 4) schlitzartig sind.

3. Vorrichtung nach Anspruch 1 oder 2, **dadurch gekennzeichnet,** daß ein einseitig oder zweiseitig schwenkbarer klappenartiger Abschnitt (5, 19, 20) vorgesehen ist.

4. Vorrichtung nach mindestens einem der vorhergehenden Ansprüche, **dadurch gekennzeichnet,** daß der klappenartige Abschnitt (19, 20) an zwei gegenüberliegenden Seiten eine durchgehende als Scharnier wirkende Verbindung (10) mit dem Bauteil (1) aufweist und daß parallel zu diesen Seiten mindestens ein Schlitz (25) und Haltelaschen (26, 27) im klappenartigen Abschnitt (19, 20) verlaufen.

5. Vorrichtung nach mindestens einem der vorhergehenden Ansprüche, **dadurch gekennzeichnet,** daß die Haltelaschen eine L-, Z-, U- oder T-Form aufweisen.

6. Vorrichtung nach mindestens einem der vorhergehenden Ansprüche, **dadurch gekennzeichnet,** daß im klappenartigen Abschnitt (5) Druckausgleichsöffnungen (9) vorgesehen sind.

7. Vorrichtung nach mindestens einem der vorhergehenden Ansprüche, **dadurch gekennzeichnet,** daß das Bauteil mit dem klappbaren Abschnitt (5) Bestandteil eines Gassammelrohres (1) ist, das die Aufblasvorrichtung (31) umgibt.

8. Vorrichtung nach mindestens einem der vorhergehenden Ansprüche, **dadurch gekennzeichnet,** daß der klappenartige Abschnitt (5) eine flache, gewölbte oder \ winkelförmige Querschnittsform aufweist.

9. Vorrichtung zur Beeinflussung der Einströmung des Gases in einen Gassack eines Airbagmoduls mit Aufblasvorrichtung und Gassack, wobei zwischen der Aufblasvorrichtung (31) und dem Gassack (3) eines Airbagmoduls mindestens ein Bauteil (1, 32) vorgesehen ist, das unter dem Druck des aus der Aufblasvorrichtung (31) austretenden Gases verformbar ist und in vorbestimmter Richtung mindestens eine Öffnung formt oder freigibt, **dadurch gekennzeichnet,** daß das Bauteil (32) gegenüberliegende sich überlappende Abschnitte (33, 34, 39, 40) aufweist, und daß mindestens ein Abschnitt unter dem Druck des Gases vom anderen Abschnitt wegbewegbar ist.

10. Vorrichtung nach mindestens einem der vorhergehenden Ansprüche, **dadurch gekennzeichnet,** daß mindestens ein Teil des verformbaren Bauteils eine andere Steifigkeit als die anderen Teile des Bauteils aufweist.

11. Vorrichtung nach Anspruch 9 oder 10, **dadurch gekennzeichnet,** daß mindestens ein Teil der gegenüberliegenden Teile (33, 34) des Bauteils (32) mindestens eine Sicke (37, 38) aufweist.

12. Vorrichtung nach mindestens einem der vorhergehenden Ansprüche, **dadurch gekennzeichnet**, daß das Bauteil (1, 32) unter dem Druck des aus der Aufblasvorrichtung (31) strömenden Gases plastisch oder elastisch verformbar ist.

13. Vorrichtung nach mindestens einem der vorhergehenden Ansprüche, **dadurch gekennzeichnet,** daß das Bauteil (1, 32) aus Metall besteht.

## Claims

1. Device for influencing the flow of gas into a gas bag of an airbag module having an inflation device and a gas bag wherein at least one component part (1, 32) provided between the inflation device (31) and the gas bag (8) is deformable under the pressure of the gas emerging from the inflation device (31) and forms or releases at least one opening in the predetermined direction,
**characterised in that**
the component part (1) has a flap-like section (5) which is defined at least in part by surrounding perforations (2, 3, 4) in the component part (1) and that between the component part (1) and the flap-like section there are overlapping slits (2, 4b) between which runs at least one retaining tab (7) which connects the component part (1) to the flap-like section (5).

2. Device according to claim 1 **characterised in that** the perforations (2, 3, 4) are slit-like.

3. Device according to claim 1 or 2 **characterised in that** a flap-like section (5, 19, 20) is provided which can swivel on one or both sides.

4. Device according to at least one of the preceding claims, **characterised in that** the flap-like section (19, 20) has on two opposite sides a continuous connection (10) acting as a hinge with the component part (1) and that at least one slit (25) and retaining tabs (26,27) run in the flap-like section (19, 20) parallel to these sides.

5. Device according to at least one of the preceding claims, **characterised in that** the retaining tabs have a L-, Z-, U- or T-shape.

6. Device according to at least one of the preceding claims **characterised in that** pressure compensating openings (9) are provided in the flap-like section (5).

7. Device according to at least one of the preceding claims, **characterised in that** the component part with the flap section (5) is a constituent part of a gas collecting tube (1) which encloses the inflation device (31).

8. Device according to at least one of the preceding claims **characterised in that** the flap-like section (5) has a flat, curved or angular cross-sectional shape.

9. Device for influencing the flow of gas into a gas bag of an airbag module having an inflation device and gas bag wherein at least one component part (1, 32) provided between the inflation device (31) and the gas bag (8) of an airbag module is deformable under the pressure of the gas emitted from the inflation device (31) and forms or releases at least one opening in a predetermined direction, **characterised in that** the component part (32) has opposing overlapping sections (33, 34, 39, 40) and that at least one section can be moved away from the other section under the pressure of the gas.

10. Device according to at least one of the preceding claims **characterised in that** at least one part of the deformable component part has a different stiffness from the other parts of the component part .

11. Device according to claim 9 or 10 **characterised in that** at least one part of the opposing parts (33, 34) of the component part (32) has at least one swage (37, 38).

12. Device according to at least one of the preceding claims, **characterised in that** the component part (1, 32) is plastically or elastically deformable under the pressure of the gas flowing out from the inflation device (31).

13. Device according to at least one of the preceding claims, **characterised in that** the component part (1, 32) is made of metal.

## Revendications

1. Dispositif pour influer sur le courant d'entrée du gaz dans un sac à gaz d'un module d'air-bag comportant un dispositif de gonflage et un sac à gaz, et dans lequel entre le dispositif de gonflage (31) et le sac à gaz (8) d'un module d'air-bag est prévu au moins un composant (1,32) qui est déformable sous la pression du gaz sortant du dispositif de gonflage (31) et forme ou libère au moins une ouverture dans une direction prédéterminée,
caractérisé en ce
que le composant (1) possède une partie (5) en forme de volet, qui est délimitée au moins en partie par des perforations (2,3,4) qui l'entourent dans le composant (1) et qu'entre le composant (1) et la partie en forme de volet sont prévues des fentes (2,4b), qui sont superposées et entre lesquelles s'étend au moins une patte de retenue (7), qui relie le composant (1) à la partie en forme de volet (5).

2. Dispositif selon la revendication 1, caractérisé en ce que les perforations (2,3,4) sont agencées en forme de fentes.

3. Dispositif selon la revendication 1 ou 2, caractérisé en ce qu'il est prévu une partie (5,19,20) en forme de volet qui peut pivoter d'un côté ou de deux côtés.

4. Dispositif selon au moins l'une des revendications précédentes, caractérisé en ce que la partie en forme de volet (19,20) comporte, sur deux côtés opposés, une liaison continue (10) agissant en tant que charnière et reliée au composant (1) et qu'au moins une fente (25) et des pattes de retenue (26,27) s'étendent, parallèlement à ses côtés, dans la partie en forme de volet (19,20).

5. Dispositif selon au moins l'une des revendications précédentes, caractérisé en ce que les pattes de retenue possèdent une forme en L, en Z, en U ou en T.

6. Dispositif selon au moins l'une des revendications précédentes, caractérisé en ce que des ouvertures de compensation de pression (9) sont prévues dans la partie en forme de volet (5).

7. Dispositif selon l'une de revendications précédentes, caractérisé en ce que le composant équipé d'un volet rabattable (5) fait partie d'un tube (1) de collecte du gaz, qui entoure le dispositif de gonflage (31).

8. Dispositif selon au moins l'une des revendications précédentes, caractérisé en ce que la partie en forme de volet (5) possède une forme en coupe transversale plane, cintrée ou coudée.

9. Dispositif pour influer sur le courant d'entrée du gaz dans un sac à gaz d'un module d'air-bag comportant un dispositif de gonflage et un sac à gaz, et dans lequel entre le dispositif de gonflage (31) et le sac à gaz (8) d'un module d'air-bag est prévu au moins un composant (1,32) qui est déformable sous la pression du gaz sortant du dispositif de gonflage (31) et forme ou libère au moins une ouverture dans une direction prédéterminée, caractérisé en ce le composant (32) comporte des tronçons opposés (33,34,39,40) qui se chevauchent et qu'au moins un tronçon peut être écarté d'un autre tronçon sous l'action de la pression du gaz.

10. Dispositif selon au moins l'une des revendications précédentes, caractérisé en ce qu'au moins une partie du composant déformable possède une rigidité différente de celle des autres parties du composant.

11. Dispositif selon la revendication 9 ou 10, caractérisé en ce qu'au moins une partie des éléments opposés (33,34) du composant (32) possède au moins une moulure (37,38).

12. Dispositif selon au moins l'une des revendications précédentes, caractérisé en ce que le composant (1,32) est déformable plastiquement ou élastiquement sous l'effet de la pression du gaz qui sort du dispositif de gonflage (31).

13. Dispositif selon au moins l'une des revendications précédentes, caractérisé en ce que le composant (1,32) est réalisé en un métal.
